# EUROPEAN PATENT APPLICATION

(11) **EP 3 006 406 A1**
(43) Date of publication of application: **13.04.2016**
(21) Application number: 14804354.0
(22) Date of filing: 30.05.2014
(51) Int. Cl.: C02F 1/32

(54) **WATER PURIFICATION DEVICE**

(30) Priority: 30.05.2013 JP 2013114525
(71) Applicant: Nikkiso Co., Ltd., Tokyo 150-6022 (JP)
(72) Inventor: OCHI, Tetsumi, Higashimurayama-shi Tokyo 189-8520 (JP); CHIBA, Toshiaki, Tokyo 150-6022 (JP); TORII, Nobuhiro, Higashimurayama-shi Tokyo 189-8520 (JP)
(74) Representative: Copsey, Timothy Graham
(86) International application number: PCT/JP2014/064390
(87) International publication number: WO 2014/192913

(57) **Abstract**

In a water purification apparatus (100), a flow passage (40) has an inlet port (42) and an outlet port (44) of water. A light source (30) irradiates the water, passing through the flow passage (40), with ultraviolet light. The light source (30) has a light emitting diode that emits the ultraviolet light whose wavelength is contained in a bandwidth of 220 nm or above to less than 300 nm, and the optical output in this wavelength bandwidth is in a range of 1 W to 50 W. The flow passage (40) passes the water at a flow rate of 5 mL/second to 250 mL/second. The flow passage (40) is formed by a wall surface having a tubular shape. A window (26) through which the ultraviolet light is passed is provided in at least part of the wall surface.

## Description

### [Technical Field]

The present invention relates to an apparatus or equipment for purifying water by irradiating the water with ultraviolet light.

### [Background Art]

Water is indispensable for human life, and it is desired that the drinking water be not only safe and secure to drink but also even superb and palatable. Also, when used as the raw material water in the fields of medical treatment and food, it is important that such water is sanitary and impurity free. In Japan, we are blessed with the environments where sanitary water can be used whenever the faucet is opened. Nevertheless, chlorine is usually added to the tap water for the sterilization purpose, and this is a factor to cause the damage to the water otherwise tasteful. In the light of this, the added chemicals such as chlorine contained the tap water is removed and, at the same time, the tap water is subjected to the sterilization treatment such as filtration and heat treatment. In other cases where spring water or the like is used, such water is used after it has undergone the sterilization treatment as appropriate.

Ultraviolet light is sometimes used in a method for sterilization treatment of water. In particular, it is known that the ultraviolet light having a wavelength of around 254 nm, which is called bactericidal rays, is high in the sterilizing effect; a light source for generating such a wavelength is an ultraviolet lamp, for instance. Examples of a water sterilizer using the ultraviolet lamp include an apparatus for keeping the water sanitary by repeatedly irradiating the water with the ultraviolet light while the retained water is being circulated (see Patent Document 1, for instance).

### [Related Art Documents]

[Patent Document 1] Japanese Unexamined Patent Application Publication No. 1998-192847.

### [Disclosure of Invention]

### [Problems to be Solved by the Invention]

However, at the scene of medical treatment and food processing, various types of apparatuses often have already been installed and therefore it is required that an apparatus to be newly introduced be of a small size in consideration of constrains of space or the like. Also, when assembled to a water purifier or water server installed at home or offices, such equipment itself is small-sized and therefore a smaller-sized water purification apparatus needs to be provided to facilitate the assembly thereof to such equipment.

The present invention has been made in view of these problems and an object thereof is to provide a water purification apparatus that is small-sized and has a high purification efficiency.

### [Means for Solving the Problem]

In order to resolve the foregoing problems, a water purification apparatus according to one embodiment of the present invention includes: a flow passage; and a light source that irradiates water passing through the flow passage with ultraviolet light. The light source has a light emitting diode that emits the ultraviolet light whose wavelength is contained in a bandwidth of 220 nm or above to less than 300 nm, and an optical output in the wavelength bandwidth is in a range of 1 W to 50 W (both inclusive).

By employing the water purification apparatus according to the above-described embodiment, about a cup full of water can be sterilized in seconds, so that the water, which has been subjected to the sterilization treatment, can be supplied as much as needed in a short time. Also, use of LED diodes as the light sources not only enables the apparatus to be small sized but also can suppress the power consumed by the apparatus.

In the water purification apparatus according to the above-described embodiment, the flow passage may have water flow at a flow rate of 5 mL/second to 250 mL/second (both inclusive).

In the water purification apparatus according to the above-described embodiment, the flow passage may be formed by a wall surface having a tubular shape; a window through which the ultraviolet light is passed may be provided in at least part of the wall surface; and the light source may be located in a position corresponding to the window surface.

In the water purification apparatus according to the above-described embodiment, a reflection portion that reflects the ultraviolet light may be provided in at least part of the wall surface.

In the water purification apparatus according to the above-described embodiment, the water purification apparatus may further include a cooling water passage that cools the light source by water flowing from a branch port to a merging port, the cooling water passage having the branch port and the merging port that communicate with the flow passage.

In the water purification apparatus according to the above-described embodiment, the flow passage may be configured such that a cross-sectional area of water flow in a position where the light source is provided is larger than that at an inlet port or an outlet port of the flow passage.

### [Advantageous Effects]

A water purification apparatus according to the present invention can increase the purification efficiency and make the apparatus smaller-sized.

### [Brief Description of Drawings]

FIG. 1 is an external view showing a water purification apparatus according to a first embodiment;
FIG. 2 is a cross-sectional view showing an internal structure of a water purification apparatus;
FIG. 3 shows an arrangement of a flow passage tube and light sources used for an experiment;
FIG. 4 is a graph showing an intensity distribution of ultraviolet light, in a flow passage tube, calculated by an optical analysis;
FIG. 5 is a graph showing a relationship between an energy amount of ultraviolet light irradiated, while water passes through a water purification apparatus, and the number of germs survived;
FIG. 6 is a cross-sectional view showing an internal structure of a water purification apparatus according to a modification 1-1;
FIG. 7 is a cross-sectional view showing an internal structure of a water purification apparatus according to a modification 1-3;
FIG. 8 is a perspective view showing light sources arranged on a substrate, which is curved into an arc-shape;
FIG. 9 is a cross-sectional view showing an internal structure of a water purification apparatus according to a second embodiment;
FIG. 10 is a cross-sectional view showing a water purification apparatus according to a modification 2-1;
FIG. 11 is a cross-sectional view showing a water purification apparatus according to a modification 2-2;
FIG. 12 is a cross-sectional view showing a water purification apparatus according to a modification 2-3;
FIG. 13 is a cross-sectional view showing a water purification apparatus according to a modification 2-4; and
FIG. 14 is a conceptual diagram showing a water purification system according to a third embodiment.

### [Modes for Carrying Out the Invention]

The embodiments of the present invention will be hereinbelow described with reference to drawings. Note that in all of the Figures the same components are given the same reference numerals and the repeated description thereof is omitted as appropriate.

### (First Embodiment)

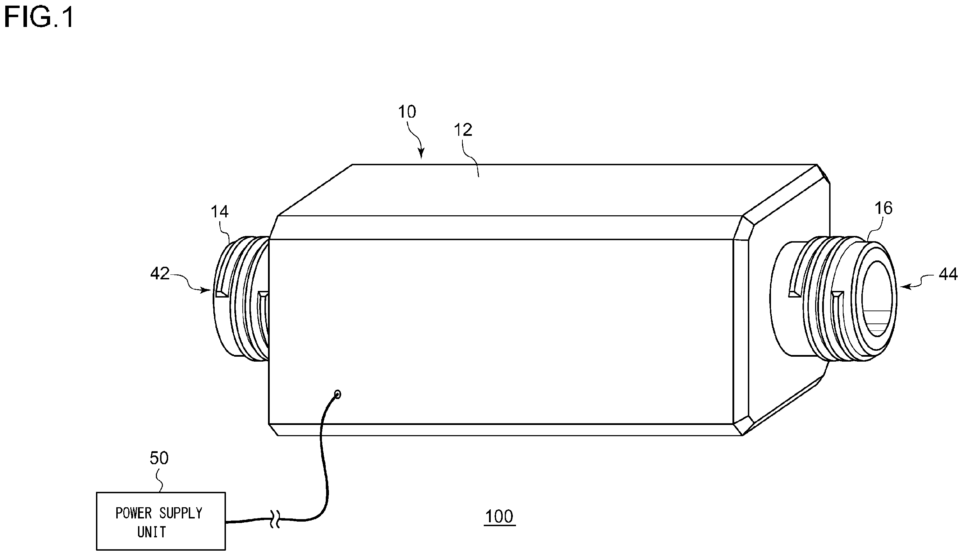

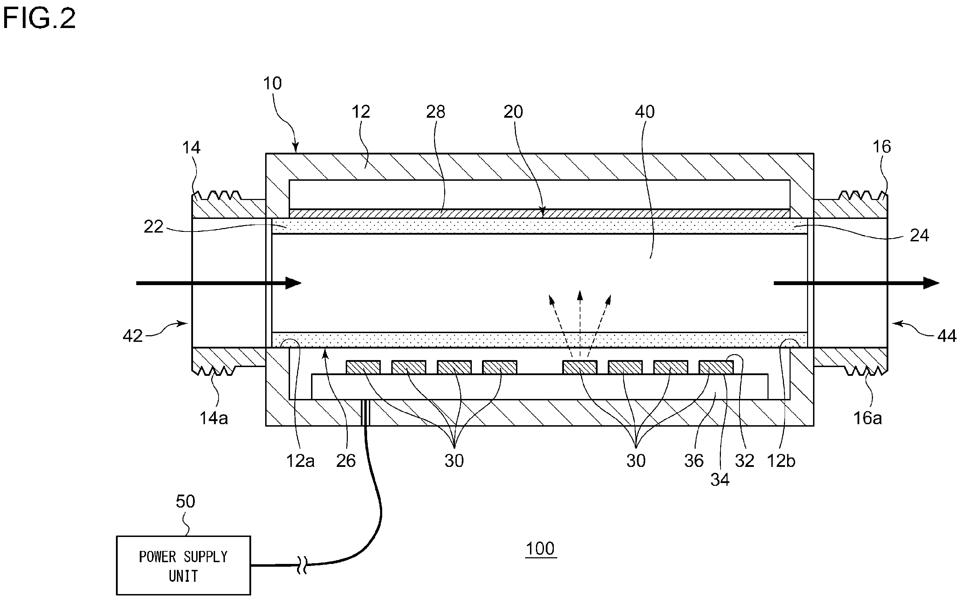

FIG. 1 shows a water purification apparatus 100 according to a first embodiment. FIG. 2 shows an internal structure of the water purification apparatus 100. In the water purification apparatus 100, a light source 30 that emits ultraviolet light is provided inside a housing 10, and irradiates water, flowing from an inlet port 42 of the housing 10 toward an outlet port 44 thereof, with the ultraviolet light, so that the water is subjected to a sterilization treatment. Since the water purification apparatus 100 uses a light emitting diode (LED) as the light source, the apparatus can be downsized considerably. Thus, the water purification apparatus 100 can be easily assembled or incorporated into a water purifier or water server installed at home or offices so as to be used.

The water purification apparatus 100 includes a housing 10, a flow passage tube 20, a light source 30, a substrate 36, and a power supply unit 50. The housing 10 has a body part 12, a first connector 14 and a second connector 16.

The body part 12, which is an approximately rectangular parallelepiped (box-shaped), is configured by a metallic plate, containing iron and the like, and a resin material. The flow passage tube 20 and the light sources 30 are stored inside the body part 12. The body part 12 is a container storing the light sources 30 that emit ultraviolet rays. Thus the body part 12 is desirably made of a material capable of blocking the ultraviolet light so that the ultraviolet light is not leaked out to the exterior.

Two openings 12a and 12b, corresponding to a cross-sectional shape of the flow passage tube 20, are formed on a side surface of the body part 12. The two openings 12a and 12b are formed such that the positions thereof agree with positions where both ends of the flow passage tube 20 are placed; the both ends of the flow passage tube 20 are inserted into the corresponding openings 12a and 12b, respectively. The first connector 14, which serves as the inlet port 42 of water, is connected to one opening 12a, whereas the second connector 16, which serves as the outlet port 44 of water, is connected to the other opening 12b.

The first connector 14, which is a cylindrical member, is mounted such that one end thereof communicates with the opening 12a formed on the side surface of the body part 12. An external side of the other end of the first connector 14 is threaded, namely subjected to a screw cutting 14a, so that a piping or the like through which water is carried or passed can be connected.

The second connector 16, which is similarly a cylindrical member, is mounted such that one end thereof communicates with the opening 12b formed on the side surface of the body part 12. An external side of the other end of the second connector 16 is threaded, namely subjected to a screw cutting 16a, so that a piping or the like through which water is carried or passed can be connected.

The flow passage tube 20 is a tube-shaped member forming a flow passage 40 where water flows, and is configured by a material that transmits ultraviolet light so that the ultraviolet light can be irradiated to the water running the flow passage 40. It is desirable that a material whose transmittance of ultraviolet light having a wavelength near 260 nm is high is selected as the material constituting the flow passage tube 20. For example, quartz (SiO₂), sapphire (Al₂O₃), fluorine-based resin or the like may be used. A first end part 22 of the flow passage tube 20 is fitted into the opening 12a, and a second end part 24 thereof is fitted into the opening 12b; thereby, the flow passage tube 20 is secured inside the body part 12.

A reflection portion 28 is provided on a part of the wall surface of the flow passage tube 20. The reflection portion 28 is formed by vapor-depositing a thin film of aluminum (Al) on an external side of the flow passage tube 20. Note that the wall where no reflection portion 28 is provided becomes a window 26 through which ultraviolet light transmits. Thereby, the ultraviolet light that has reached the reflection portion 28 after transmitting the interior of the flow passage tube 20 through the window 26 is reflected, so that the thus reflected ultraviolet light can again transmit the interior of the flow passage tube 20. Hence, the intensity of ultraviolet light inside the flow passage tube 20 can be enhanced.

A plurality of light sources 30 are provided inside the body part 12, and the light sources 30 irradiates water, passing through the flow passage tube 20, with ultraviolet light. In the present embodiment, an ultraviolet light LED is used as the light source 30, and the ultraviolet LED whose center wavelength or peak wavelength lies in an ultraviolet region of about 220 nm to about 300 nm is used. In particular, an ultraviolet light LED, which emits an ultraviolet light of near 260 nm having a high sterilization efficiency, is preferably used. It is known that the ultraviolet light LED as used herein is, for example, one using aluminum gallium nitride (AlGaN).

The light source 30 has a light emission surface 32, which emits ultraviolet light, and a mounting surface 34, which faces the light emission surface 32. The plurality of light sources 30 are arranged on the substrate 36 such that each mounting surface 34 thereof comes in contact with the substrate 36. The substrate 36 on which the light sources 30 are mounted is provided inside the body part 12 such that the light emission surface 32 faces an outer wall of the flow passage tube 20. The substrate 36 is thermally connected to the light sources 30 and the body part 12, and radiates the heat produced by the light sources 30 to the exterior of the housing 10.

The power supply unit 50 is connected to the light sources 30 by way of the substrate 36, and supplies drive current to the light sources 30 so as to control the light emission of the light sources 30. The power supply unit 50 turns on the light sources 30 in synchronization with the timing with which the water passes inside the flow passage tube 20. The power supply unit 50 controls the turning on and off of the light sources 30 in response to, for example, an input of a drive signal or the like of a pump that supplies the water to the water purification apparatus 100. If ultraviolet lamps are used, it may take some time before the output of the lamps is stabilized after the lamps electrically conduct. If, however, LEDs are used, the ultraviolet light having an output required can be instantaneously irradiated, so that controlling the power supply unit 50 allows the light source 30 to emit light only when water passes. This can reduce the power consumption, as compared with the case where the light sources 30 are constantly turned on, and can raise the sterilization efficiency relative to the overall power consumed by the light sources 30.

With the above-described configuration and arrangement, the water purification apparatus 100 performs the sterilization treatment on the water that flows in through the inlet port 42, passes through the flow passage 40 formed by the flow passage tube 20 and flows out of the outlet port 44, by using the ultraviolet light irradiated from the light sources 30.

An experiment description is now given of the sterilization treatment using the water purification apparatus 100. In the experiment, the intensity distribution of ultraviolet light emitted from the light sources 30 was first calculated by an optical simulation analysis. Then, the sterilizing effect on fungus liquid (bacterial solution), which is made to pass through the water purification apparatus 100, was examined based on the values obtained in the intensity distribution of ultraviolet light.

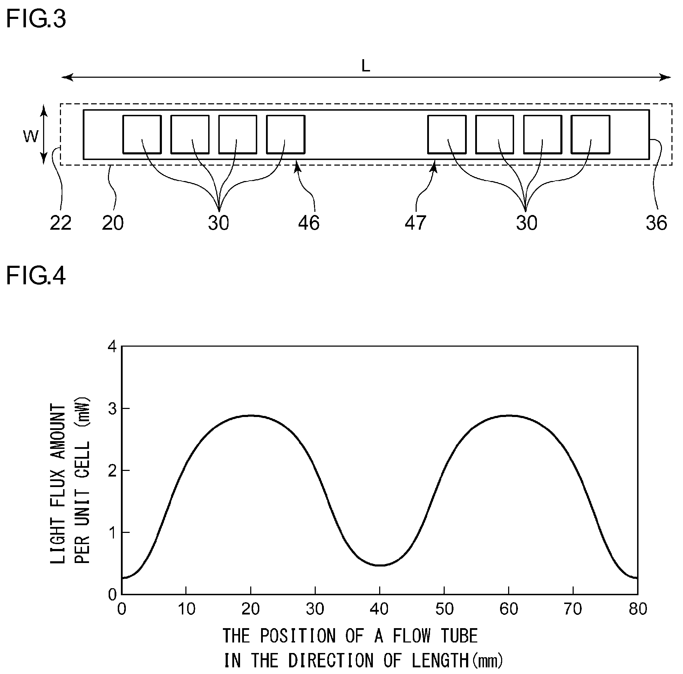

FIG. 3 shows an arrangement of the flow passage tube 20 and the light sources 30 used for the experiment. The flow passage tube 20 is a rectangle, in its cross-sectional shape, having the width W equal to 6 mm (a square of 6 mm by 6 mm) and is a quartz tube having the length L equal to 80 mm. The light source 30 outputs ultraviolet light whose center wavelength is 280 nm and whose full-width at half-maximum (FWHM) is about 10 nm, and is a surface-mounted LED (made by NIKKISO Co., Ltd.) whose light emission surface is of a square size of 5 mm by 5 mm. A first module 46, where four of these LEDs are modularized, and a second module 47, where another four of these LEDs are modularized, are used. The first module 46 is arranged such that the center position thereof is located away by about 20 mm from the first end part 22; the second module 47 is arranged such that the center position thereof is located away by about 60 mm from the first end part 22.

FIG. 4 is a graph showing an intensity distribution of ultraviolet light, in the flow passage tube 20, calculated by an optical analysis. FIG. 4 shows a flux amount of ultraviolet light irradiated to each unit cell; here the flow passage tube 20, whose length L is 80 mm, is divided into eighty unit cells each size of which is a square of 6 mm x 6 mm with the length of 1 mm (namely, 6 mm x 6 mm x 1 mm). A model for use in the optical analysis is first constructed corresponding to a positional relationship between the flow passage tube 20 and the light sources 30 shown in FIG. 3, and then the intensity distribution of light irradiated to each unit cell is obtained through simulation run. Then, a total amount of light flux per LED measured by using an integrating sphere is incorporated into a simulation result and thereby the values shown in FIG. 4 were obtained. The graph of FIG. 4 corresponds to the values when the drive current of 60 mA is supplied to each LED.

The following are results of the optical analysis. It was found that when eight LEDs are used and a drive current of 60 mA is supplied to each of the eight LEDs, the optical output of 144 mW in total is obtained. Also, it was found that since the area of a side surface of the flow passage tube 20 is 0.6 cm × 8 cm = 4.8 cm², the illuminance of 30 mW/cm² on average is obtained if variation in the intensity depending on locations is neglected. Similarly, calculation was carried out when a drive current of 100 mA is supplied to each of the eight LEDs; in this case, the optical output of 252 mW in total was obtained and an average illuminance was 53 mW/cm².

A description is now given of a sterilization experiment performed on the fungus liquid, which was made to pass through the water purification apparatus 100. "Bacillus subtilis NBRC3134" of bacillus subtilis (spore) was used as a bacterial strain. The sterilization rate was obtained as follows. That is, the fungus liquid, which has been adjusted such that the germ count per 1 mL is about 10⁵, is made to pass through the water purification apparatus 100 and then the germ count, before and after passing through the apparatus 100, contained in the fungus liquid was measured by a known method for colony count. As experiment conditions, the optical output of the light sources 30 and the flow rate of fungus liquid made to pass through the flow passage tube 20 are varied; then the sterilization rates for the respective conditions were obtained. Experiment results corresponding to the experiment conditions are shown in Table 1.

**[Table 1]**

| ID | OPTICAL OUTPUT (mW) | FLOW RATE (mL/Minute) | FLOW (mm/Second) | WATER FLOW TIME (Seconds) | IRRADIATION ENERGY (mJ) | GERM COUNT (Pieces/mL) | | SURVIVAL RATE (AFTER-THE-PASSING/ BEFORE-THE-PASSING) |
|---|---|---|---|---|---|---|---|---|
| | | | | | | BEFORE-THE-PASSING | AFTER-THE-PASSING | |
| 1 | 144 | 30 | 14 | 5.7 7 | 820 | 6.2×10⁵ | 3.0×10¹ | 48×10⁻⁵ |
| 2 | | 50 | 23 | 3.5 | 504 | 6.5×10⁵ | 1.5×10² | 2.3×10⁻⁴ |
| 3 | | 100 | 46 | 1 7 | 245 | 4.5×10⁵ | 15×10⁴ | 3.3×10⁻² |
| 4 | | 150 | 69 | 1.2 | 173 | 6.1×10⁵ | 6.9×10⁴ | 1.1×10⁻¹ |
| 5 | | 200 | 93 | 0.86 | 124 | 4.1×10⁵ | 8.8×10⁴ | 19×10⁻¹ |
| 6 | | 300 | 139 | 0.58 | 84 | 3.9×10⁵ | 1.4×10⁵ | 3.6×10⁻¹ |
| 7 | 252 | 30 | 14 | 5.7 7 | 1436 | 6.1×10⁵ | <1 | 16×10⁻⁶ |
| 8 | | 50 | 23 | 3.5 | 882 | 5.6×10⁵ | 2.3×10¹ | 4.1x10⁻⁵ |
| 9 | | 100 | 46 | 1.7 | 428 | 4.9×10⁵ | 3.0×10² | 6.1 ×10⁻⁴ |
| 10 | | 150 | 69 | 1.2 | 302 | 6.6×10⁵ | 4.0×10³ | 8.2×10³ |
| 11 | | 200 | 93 | 0.86 | 217 | 5.1×10⁵ | 1.0×10⁴ | 1.5×10⁻² |
| 12 | | 300 | 139 | 0.58 | 146 | 5.0×10⁵ | 8.9×10⁴ | 1.8×10⁻¹ |

Two conditions were set for the optical output of the light sources 30. One condition is that the optical output is 144 mW corresponding to the case where a current of 60 mA flows through each of the eight LEDs arranged. The other condition is that the optical output is 252 mW corresponding to the case where a current of 100 mA flows through each of the eight LEDs. Also, as the flow rates at which the liquid is made to pass through the flow passage tube 20, a total of six conditions comprised of 30, 50, 100, 150, 200, and 300 mL/minute were set. The "flow velocity" (i.e., the flow rate) is a speed at which the liquid passes through the flow passage tube 20 whose cross-sectional area of water flow is 0.36 cm². The "water flow time" is time that it takes for the liquid to complete passing through the flow passage tube 20, which is 80 mm long, irradiated with the ultraviolet light. The "irradiation energy" is a value obtained when the optical output is multiplied by the water flow time.

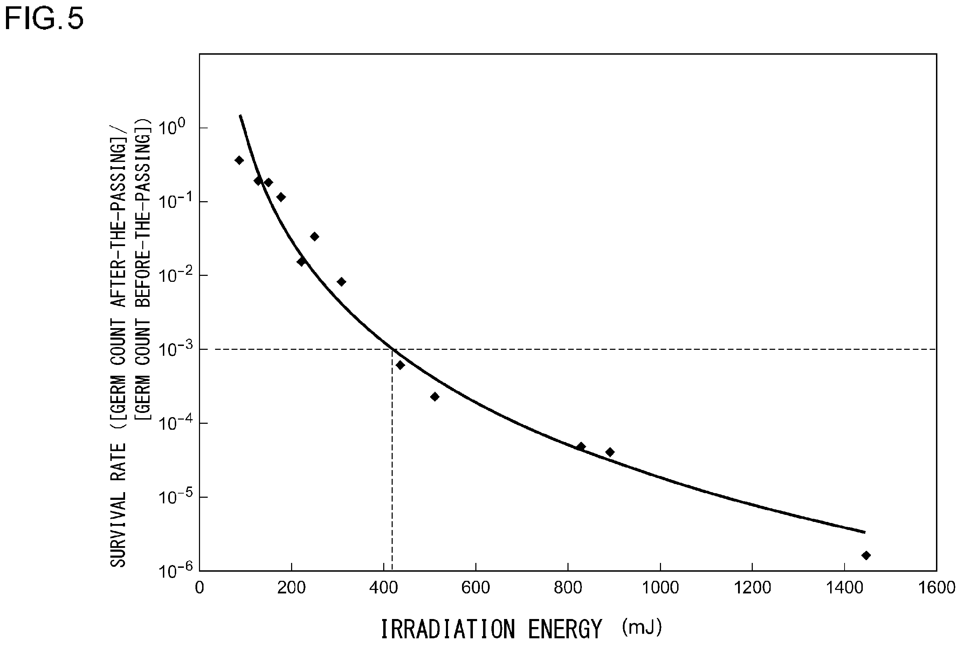

FIG. 5 is a graph showing a relationship between an energy amount of ultraviolet light irradiated, while water passes through the water purification apparatus 100, and the number of germs survived; FIG. 5 shows the experiment results graphically. It was shown by FIG. 5 that the more the energy amount of ultraviolet light irradiated to the water passing through the flow passage tube 20 becomes, the higher the sterilizing effect will be. Also, it was shown that in order to achieve the sterilizing effect where the number of bacillus subtilis (spores) survived is - 3Log (99.9% inactivated), the ultraviolet light whose wavelength is 280 nm is preferably irradiated such that the irradiation energy is 430 mJ or above. It was found that if, at this time, an irradiation area of ultraviolet light is assumed to be equal to the area of the side surface of the flow passage tube 20, which is 4.8 cm², then the ultraviolet light is preferably irradiated such that the integrated illuminance of the ultraviolet light whose wavelength is 280 nm is 90 mJ/cm² or higher, in order to achieve the sterilizing effect where the number thereof is -3Log.

It is evident from the above results that if the optical output is 252 mW and if the time length for the liquid to pass through the flow passage tube 20 is set to about 1.8 seconds or longer, the water purification apparatus 100 can preferably sterilize the flowing water. Thus, the water purification apparatus 100 can purify about 100 mL of water per minute.

### (Modification 1-1)

In the above-described embodiment, an exemplary case is shown where the light sources 30 are provided on a single side surface of the flow passage tube 20. In a modification, however, the light sources 30 may be placed in positions corresponding to a plurality of side surfaces. A description is hereunder given of a modification where the light sources are provided in positions corresponding to a plurality of side surfaces.

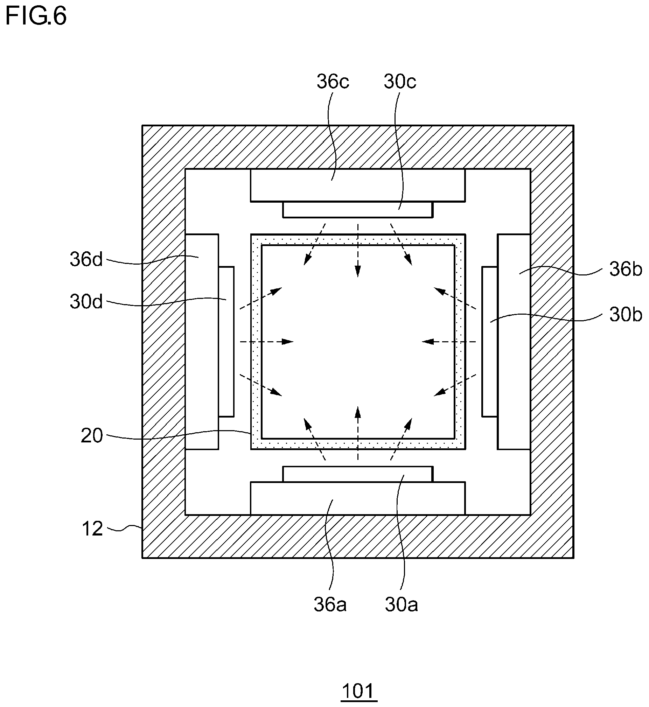

FIG. 6 is a cross-sectional view showing an internal structure of a water purification apparatus 101 according to a modification 1-1. The water purification apparatus 101 differs from the water purification apparatus 100 according to the first embodiment in that there are provided light sources 30a, 30b, 30c and 30d (hereinafter generically referred to as "light source 30" or "light sources 30" also) corresponding to the four side surfaces of the flow passage tube 20, which is of a square tube shape. In the water purification apparatus 101, there are provided four substrates 36a, 36b, 36c, and 36d (hereinafter generically referred to as "substrate 36" or "substrates 36" also) and the same number of light sources 30 as that in the first embodiment are placed on each of the four substrates 36. This allows the water purification apparatus 101 to acquire four times as much optical output as that acquired in the first embodiment and therefore the sterilization efficiency can be enhanced.

Similar to the first embodiment, the light source 30 is an ultraviolet light LED that outputs ultraviolet light whose center wavelength is 280 nm and whose full-width at half-maximum (FWHM) is about 10 nm. When eight LEDs are placed on each substrate 36, an output of 252 mW can be obtained per substrate 36; for the four substrates 36, the output of the water purification apparatus 101 as a whole is about 1 W. If, at this time, the ultraviolet light whose output is 1 W is irradiated for the duration of 0.43 seconds or more, the irradiation energy produced can be 430 mJ or above and the sterilizing effect can be achieved where the number of bacillus subtilis (spores) survived is -3Log. It is found therefore that a preferred sterilizing effect can be achieved as long as the flow speed is such that the time length for the water to pass through the water purification apparatus 101 is 0.43 seconds or longer.

Here, the flow rate for which the time length for the water to pass through the water purification apparatus 101 is 0.43 seconds or longer is 400 mL/minute. Thus the water purification apparatus 101 can purify 400 mL of water per minute. For a cup of water of about 200 mL, for example, the sterilization treatment can be completed in thirty seconds. Specifically, use of ultraviolet light whose wavelength is 280 nm and whose output is 1 W allows the water of about 6 mL to be preferably sterilized per second.

If an ultraviolet light LED having a higher output is used as the light source 30 and/or if the number of LEDs used is increased, the amount of water that can be sterilized per unit time can be increased. If, for example, a design is made such that the output of the water purification apparatus 101 as a whole is 5 W, the sterilization treatment required for a cup of water of about 200 mL can be completed in about six seconds. The flow rate of water used in a general water purifier and water server for household use, a cup-type automatic vending machine and the like is 20 to 100 mL/second. Thus, even if the water purification apparatus 101 is assembled or incorporated into these devices or equipment, the sterilization treatment can be suitably carried out without sacrificing the flow rate. Besides, use of ultraviolet light whose wavelength is 280 nm and whose output is 50 W allows the water of about 250 mL to be suitably sterilized per second.

The number of substrates 36 is not limited to four, and the substrates 36 may be provided in positions corresponding to any two surfaces or three surfaces of the four side surfaces of the flow passage tube 20. Also, the number of light sources 30 placed on a plurality of substrates 36 may differ for each substrate 36, and the arrangement of the light sources 30 and the number thereof may be varied according to the shape and the like of the flow passage tube 20.

### (Modification 1-2)

In a modification of the above-described embodiment, the output wavelength of LED used as the light source 30 may be made to differ. For example, the ultraviolet light, whose wavelength is 260 nm, has a higher sterilization efficiency than that whose wavelength is 280 nm; for this reason, use of LED emitting the ultraviolet light whose wavelength is 260 allows the water purification ability to increase. An experiment description is given hereunder of a case where verified is a difference in the sterilizing effect between when the ultraviolet light having a wavelength of 280 nm is used and when that having a wavelength of 260 nm is used.

In this experiment, 0.1 mL of an adjusted liquid of bacillus subtilis (spores) is placed on a petri dish, then the ultraviolet light is irradiated from a single LED, which is arranged at a distance of 10 mm away from the fungus liquid, and the irradiation time required to achieve that the number of germs survived is -3Log was evaluated. The light source used herein was an ultraviolet light source whose wavelength is 260 nm; used was an AlGaN-based ultraviolet light LED, made by NIKKISO Co., Ltd., where the center wavelength is 260 nm and the full-width at half-maximum (FWHM) is about 10 nm. The ultraviolet light source having a wavelength of 280 nm is the same as one used in the above-described embodiment. Experiment results obtained are shown in Table 2.

**[Table 2]**

| WAVELENGTH (nm) | ILLUMINANCE (mW/cm²) | STERILIZING TIME REQUIRED TO ACHIEVE -3LOG (sec) | INTEGRATED ILLUMINANCE (mJ/cm²) |
|---|---|---|---|
| 260 | 1.3 | 140 | 182 |
| 280 | 2.4 | 240 | 576 |

As shown in Table 2, in order to obtain the sterilizing effect of -3Log, it was required that the ultraviolet light whose illuminance is 1.3 mW/cm² be irradiated for the duration of 140 seconds, when the ultraviolet source having a wavelength of 260 nm is used. In contrast thereto, in order to obtain the same sterilizing effect as above, it was required that the ultraviolet light whose illuminance is 2.4 mW/cm² be irradiated for the duration of 240 seconds, when the ultraviolet source having a wavelength of 280 nm is used. It was found from this that while the integrated illuminance required for the case of the ultraviolet light having a wavelength of 260 nm is 182 mJ/cm², the integrated illuminance required for the case of the ultraviolet light having a wavelength of 280 nm is 578 mJ/cm². In other words, it was found that use of ultraviolet light having a wavelength of 260nm increases the sterilization efficiency, over that of the ultraviolet light having a wavelength of 280nm, by a factor of about 3.1. Hence, when the LED having a wavelength of 260 nm is used as the light source used in the above-described embodiment, this can cause to obtain the sterilization efficiency in about 3.1 times that obtained in the same optical output.

Note that the center wavelength of the light source used for the water purification apparatus is not limited to 260 nm and 280 nm, and the wavelength thereof may be other than those as long as such ultraviolet light source can achieve the sterilizing effect by interfering with a biological body's DNA. For example, the ultraviolet light having a predetermined wavelength may be selected from among the ultraviolet lights whose wavelengths are contained in a bandwidth of 220 nm to 300 nm (both inclusive). Also, a plurality of ultraviolet light LEDs whose center wavelengths differ from each other may be combined.

### (Modification 1-3)

In a modification of the above-described first embodiment, a cylindrically-shape flow passage tube may be used instead of the flow passage tube whose cross-sectional shape is a rectangular or square.

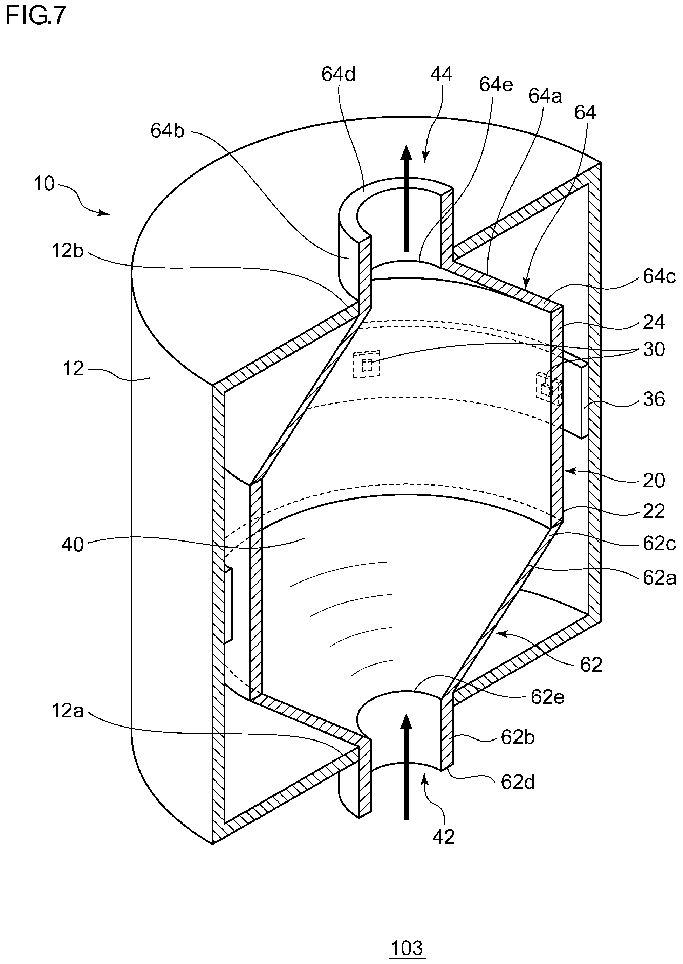

FIG. 7 is a water purification apparatus 103 according to a modification 1-3. The water purification apparatus 103 includes a housing 10, a flow passage tube 20, light sources 30, and a substrate 36. The housing 10 has a cylindrically-shaped body part 12, a first coupling portion 62 and a second coupling portion 64, both of which are funnel-shaped.

The first coupling portion 62 has a conical part 62a and a cylindrical part 62b. The conical part 62a of the first coupling portion 62 has an upper end 62c that is largely opened, and is connected to the first end part 22 of the flow passage tube 20. A communication port 62e is formed on a bottom of the conical part 62a, and an end of the cylindrical part 62b is mounted to the bottom thereof. The cylindrical part 62b is secured in a state where the cylindrical part 62b is inserted into the opening 12a of the housing 10, and a lower end 62d, which is the inlet port 42, is exposed on the outside of the housing 10.

Similar to the first coupling portion 62, the second coupling portion 64 has a conical part 64a and a cylindrical part 64b. The conical part 64a of the second coupling portion 64 has an upper end 64c that is largely opened, and is connected to the second end part 24 of the flow passage tube 20. A communication port 64e is formed on a bottom of the conical part 64a, and an end of the cylindrical part 64b is mounted to the bottom thereof. The cylindrical part 64b is secured in a state where the cylindrical part 64b is inserted into the opening 12b of the housing 10, and a lower end 64d, which is the outlet port 44, is exposed on the outside of the housing 10.

The flow passage tube 20 is a cylindrically-shaped member, and the cross-sectional area of water flow in the flow passage tube 20 is larger than the inlet port 42 and the outlet port 44 of a flow passage 40. The first end part 22 of the flow passage tube 20 is connected to the first coupling portion 62, whereas the second end part 24 of the flow passage tube 20 is connected to the second coupling portion 64. This configuration and arrangement allow the flow passage tube 20 to be secured inside the body part 12 of the housing 10, and form the flow passage 40 that communicates with the inlet port 42 and the outlet port 44.

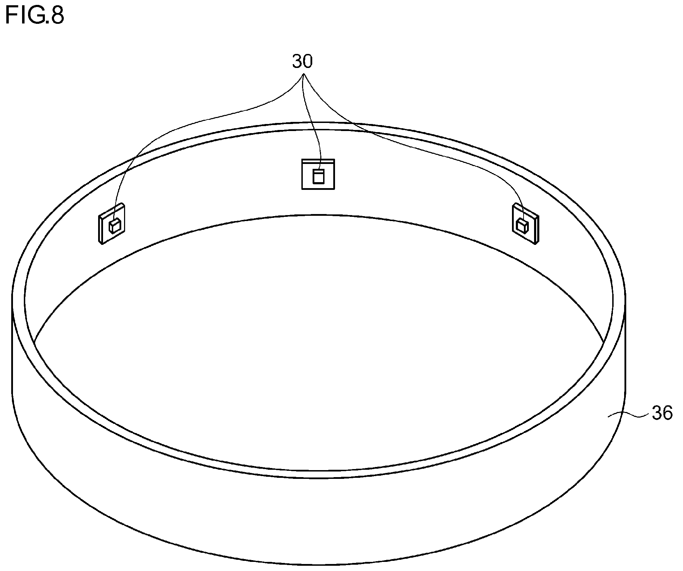

A plurality of light sources 30 are provided on the substrate 36, which is curved, along an inner wall of the cylindrical body part 12, into an arc-shape. FIG. 8 is a perspective view showing the light sources 30 arranged on the substrate 36, which is curved into an arc-shape. For example, the substrate 36 can be circularly curbed by using a flexible substrate having flexibility as the substrate 36. Thereby, the substrate 36 can be provided along the inner wall of the body part 12, and the plurality of light sources 30 can be arranged along the inner wall of the cylindrical body part 12. With the light sources arranged along the inner wall of the body part 12, the ultraviolet light can be evenly and uniformly irradiated to the interior of the cylindrical flow passage tube 20.

Although FIG. 8 shows a case where the plurality of light sources 30 are arranged side by side at intervals in a row in a circle, the light sources 30 may be arranged in two rows in a circle or may be densely arranged in a circle with almost no space or completely no space left between adjacent light sources 30. The dense arrangement of the light sources 30 allows the irradiation intensity of ultraviolet light to be increased and thereby the water purification can be made further small-sized and can have an increased water purification ability.

### (Second Embodiment)

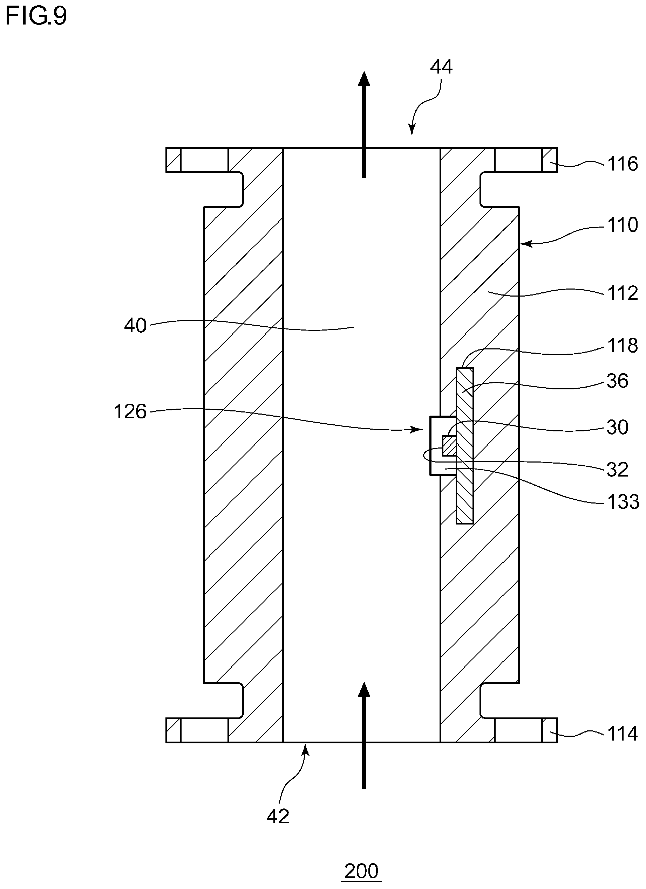

FIG. 9 shows a water purification apparatus 200 according to a second embodiment. The water purification apparatus 200 differs from the water purification apparatus 100 according to the first embodiment in that a straight tube 110, which forms a water flow passage 40, is provided in place of the housing 10 and the flow passage tube 20 in the first embodiment. A description is given hereinbelow centering around differences from the first embodiment.

The water purification apparatus 200 includes a straight tube 110, a light source 30, a substrate 36, and a not-shown power supply unit. The straight tube 110 includes a side wall portion 112, a first connector 114, and a second connector 116.

The side wall portion 112, having a cylindrical shape, is configured by a metallic plate, containing iron and the like, and a resin material. Part of the side wall portion 112 is a hollow space where the light source 30 and the substrate 36 are stored and installed, and is provided with a storage part 118 and a window 126 that communicates with the flow passage 40. The first connector 114 and the second connector 116 are connectable to a piping or the like through which water is carried or passed, and become an inlet port 42 and an outlet port 44 of water, respectively.

The light source 30 and the substrate 36 are contained in the storage part 118 and thereby are embedded in the side wall portion 112. The light source 30 is so provided as to be exposed to the window 126, and irradiates ultraviolet light to water flowing in the flow passage 40 via the window 126. A protective portion 133 for water proofing is provided on a light emission surface 32 of the light source 30 and a surface of the substrate 36. It is desirable that the protective portion 133 is formed of a material whose transmittance of ultraviolet light is high; for example, quartz (SiO₂), sapphire (Al₂O₃), fluorine-based resin or the like may be used. A reflection portion may be provided in a part of an inner wall of the side wall portion 112. For example, the reflection portion is provided in a position counter to the window 126. Provision of this reflection portion allows the ultraviolet light, which has been irradiated inside the straight tube 110 through the window 126, to be reflected, thereby increasing the intensity of ultraviolet light inside the straight tube 110.

With the above-described configuration and arrangement, the water purification apparatus 200 can perform the sterilization treatment by irradiating the water, passing through the flow passage 40, with the ultraviolet light. The water purification apparatus 200 uses the straight tube 110, having an enough strength as the housing, as the flow passage 40, so that the durability can be enhanced over that of the flow passage tube 20 configured by the quarts tube, fluorine-based resin or the like.

### (Modification 2-1)

In a modification of the above-described second embodiment, a cooling water passage for cooling the light source 30 may be further provided.

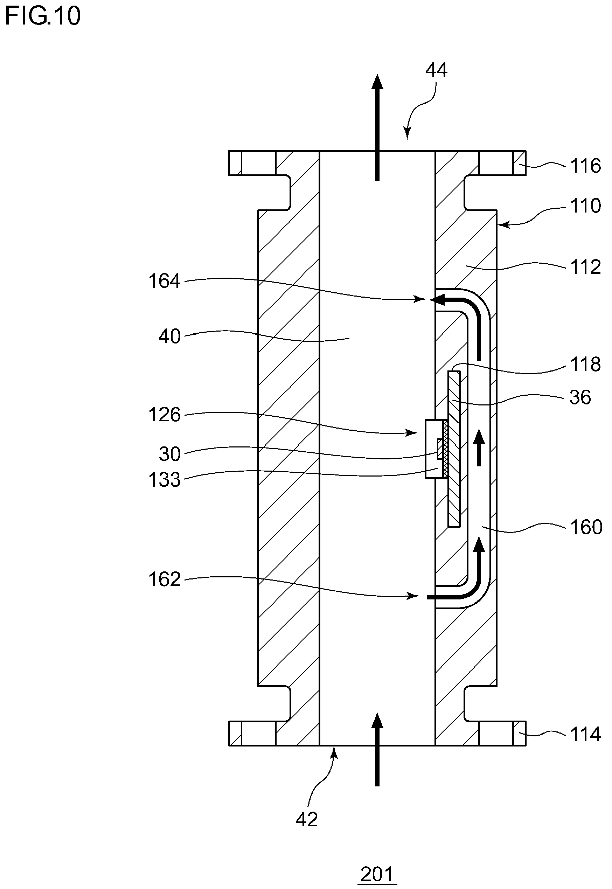

FIG. 10 is a water purification apparatus 201 according to a modification 2-1. The water purification apparatus 201 further includes a cooling water passage 160. The cooling water passage 160 is provided inside the side wall portion 112, and communicates with the flow passage 40 via a branch port 162 and a merging port 164. The cooling water passage 160 is so formed as to run near the substrate 36. Thereby, part of water flowing through the flow passage 40 flows into the cooling water passage 160 from the branch port 162, runs near the substrate 36 and returns to the flow passage 40 from the merging port 164. Provision of the cooling water passage 160 enables the light source 30 to be water-cooled, so that the reduction of output caused by the heat produced by the light source 30 and the deterioration in the light source 30 can be prevented. This can, in turn, improve reliability of the water purification apparatus 201.

### (Modification 2-2)

In a modification of the above-described second embodiment, the width of a flow passage located in a position where the light source 30 is provided may be broader than that near the inlet port and that near the outlet port.

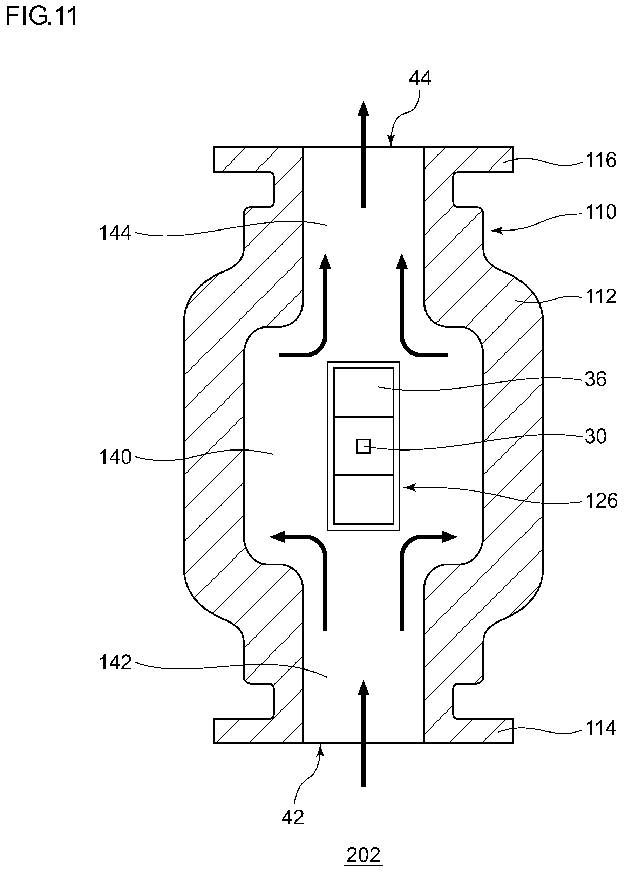

FIG. 11 is a cross-sectional view showing a water purification apparatus 202 according to a modification 2-2. In the water purification apparatus 202, the flow passage thereof is formed such the cross-sectional area of water flow in an intermediate flow passage 140 located near the light source 30 is larger than a first flow passage 142 near the inlet port 42 and a second flow passage 144 near the outlet port 44. This configuration can reduce the flow velocity of water in a region where the ultraviolet light of the light source 30 is irradiated, so that the value of integrated illuminance irradiated to the water can increase by as much as a difference between this reduced flow velocity and the normal flow velocity. As a result, the sterilization capacity of water is improved over a case where the width of the intermediate flow passage 140 is not enlarged.

### (Modification 2-3)

In a modification of the above-described second embodiment, an elbow tube having a bent part may be used, as the flow passage, in place of the straight tube 110.

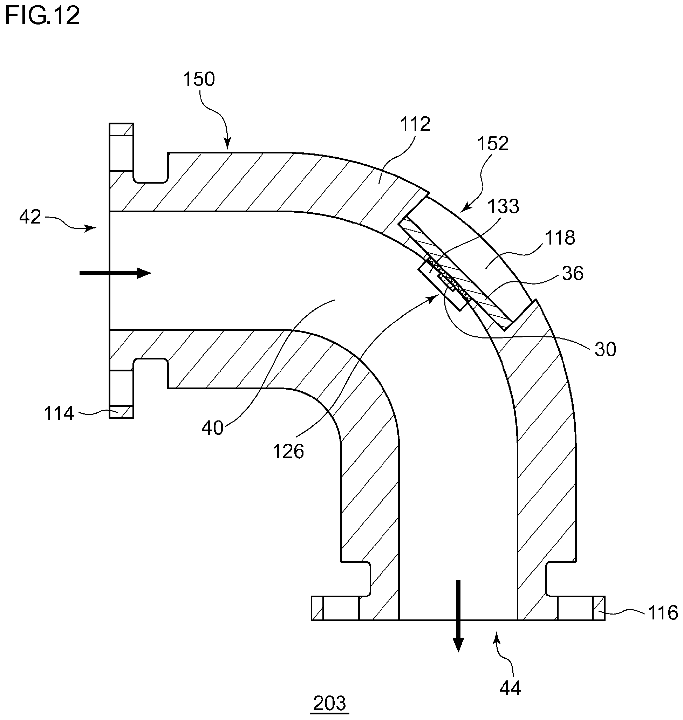

FIG. 12 is a cross-sectional view showing a water purification apparatus 203 according to a modification 2-3. The water purification apparatus 203 differs from the water purification apparatus 200 according to the second embodiment in that an elbow tube 150 having a bent part 152 is used as the flow passage instead of the straight tube 110. A storage part 118 where the light source 30 and the substrate 36 are embedded is provided in a side wall portion 112 in the bent part 152. Thus, the light source 30 and the substrate 36 are placed in the bent part 152. With this configuration and arrangement, the water purification apparatus 203 can perform a purification treatment by irradiating the water, passing through the bent part 152, with the ultraviolet light.

### (Modification 2-4)

In a modification of the above-described second embodiment, a T-shaped tube having a branch portion may be used, as the flow passage, in place of the straight tube 110.

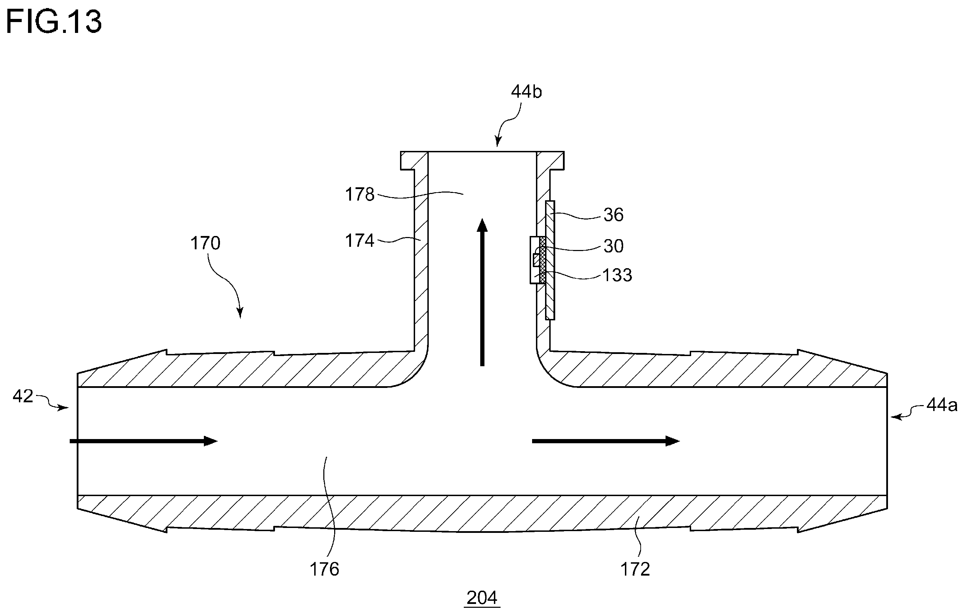

FIG. 13 is a cross-sectional view showing a water purification apparatus 204 according to a modification 2-4. The water purification apparatus 204 differs from the water purification apparatus 200 according to the second embodiment in that a T-shaped tube 170 having a branch portion 174 is used as the flow passage instead of the straight tube 110. T-shaped tube 170 has a body part 172 and a branch portion 174. The body part 172 forms a main flow passage 176 that linearly extends from an inlet port 42 toward a first outlet port 44a. The branch portion 174 forms a branched-out flow passage 178 that is branched out from the main flow passage 176 and extends toward a second outlet port 44b. The light source 30 and the substrate 36 are provided in a side wall of the branch portion 174. The light source 30 irradiates the ultraviolet light to the water passing through the branched-out flow passage 178.

With this configuration and arrangement, in the modification 2-4, part of water flowing through the main flow passage 176 can be branched out to the branched-out flow passage 178 and, simultaneously, the water passing through branched-out flow passage 178 can be irradiated with the ultraviolet light. As a result, the water purification apparatus 204 can perform the purification treatment by irradiating the water, flowing out of the second outlet port 44b, with the ultraviolet light.

### (Third Embodiment)

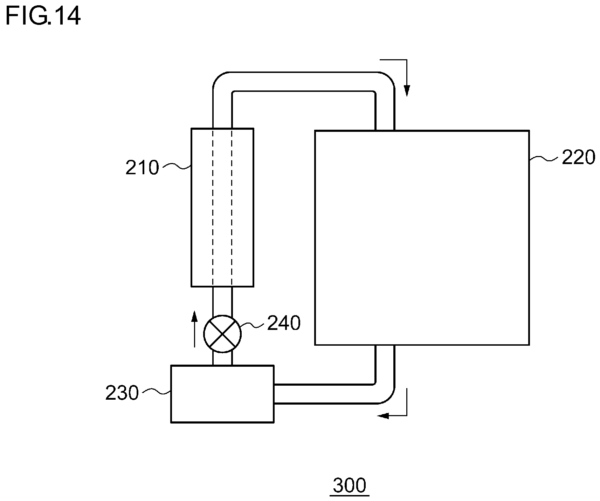

FIG. 14 is a conceptual diagram showing a water purification system 300 according to a third embodiment. The water purification system 300 includes a water purification apparatus 210, a tank 220, a pump 230, and a valve 240. Water stored in the tank 220 is supplied to the water purification apparatus 210 by way of the pump 230 and is returned to the tank 220 after the water has been purified. In this manner, the water is subjected to the sterilization treatment by circulating it. This can sanitarily maintain the water stored in the tank 220.

The water purification apparatus 210 is a water purification apparatus described in the above-described first embodiment, the second embodiment, or any of the modifications. The water purification apparatus 210 is connected to the pump 230 via the valve 140; the sterilization treatment is performed on the water supplied from the pump 230 by irradiating it with the ultraviolet light, and the thus purified water is returned to the tank 220. The amount of water passing through the water purification apparatus 210 is regulated by the valve 240.

In a modification, the water purification system 300 may be configured without provision of the pump 230. In this case, an upward flow is generated, in the water purification apparatus 210, by the heat produced by the light source(s) equipped with the water purification apparatus 210, so that the flow of water can be created, by convection, in between the water purification apparatus 210 and the tank 220.

The present invention is not limited to the above-described embodiments only. It is understood that various modifications such as changes in design may be made based on the knowledge of those skilled in the art, and the embodiments added with such modifications are also within the scope of the present invention.

In the above-described first embodiment, the second embodiment, and any of the modifications, the germs to be sterilized is bacillus subtilis (spores). However, other germs and viruses may be objects to be treated by the irradiation of ultraviolet rays. For example, colon bacilli, staphylococcus aurei, aspergilli, influenza virus and the like may be objects for sterilization. For example, staphylococcus aurei can be generally killed by using a lower energy than the irradiation energy required for the sterilization of bacillus subtilis; thus, staphylococcus aurei can be preferably sterilized using an energy amount less than the above-described irradiation energy amount of ultraviolet light. Instead of the sterilization treatment, water may be purified by irradiating the ultraviolet light to organic substances and the like contained in the water and then decomposing them.

### [Explanation of Reference Numerals]

- 10: Housing
- 12: Body part
- 20: Flow passage tube
- 26: Window
- 28: Reflection portion
- 30: Light source
- 36: Substrate
- 40: Flow passage
- 42: Inlet port
- 44: Outlet port
- 100, 200, 210: Water purification apparatus
- 300: Water purification system

### [Industrial Applicability]

A water purification apparatus according to the present invention can increase the purification efficiency and make the apparatus smaller-sized.

## Claims

1. A water purification apparatus comprising:
a flow passage; and
a light source that irradiates water, passing through the flow passage, with ultraviolet light,
wherein the light source has a light emitting diode that emits the ultraviolet light whose wavelength is contained in a bandwidth of 220 nm or above to less than 300 nm, and
an optical output in the wavelength bandwidth is in a range of 1 W to 50 W (both inclusive).

2. The water purification apparatus according to claim 1, wherein the flow passage has water flow at a flow rate of 5 mL/second to 250 mL/second (both inclusive).

3. The water purification apparatus according to claim 1 or claim 2, wherein the flow passage is formed by a wall surface having a tubular shape,
wherein a window through which the ultraviolet light is passed is provided in at least part of the wall surface, and
wherein the light source is located in a position corresponding to the window surface.

4. The water purification apparatus according to claim 3, wherein a reflection portion that reflects the ultraviolet light is provided in at least part of the wall surface.

5. The water purification apparatus according to any one of claim 1 to claim 4, further comprising a cooling water passage that cools the light source by water flowing from a branch port to a merging port, the cooling water passage having the branch port and the merging port that communicate with the flow passage.

6. The water purification apparatus according to any one of claim 1 to claim 5, wherein the flow passage is configured such that a cross-sectional area of water flow in a position where the light source is provided is larger than that at an inlet port or an outlet port of the flow passage.
